# EUROPEAN PATENT APPLICATION

(11) **EP 2 610 159 A1**
(43) Date of publication of application: **03.07.2013**
(21) Application number: 12199641.7
(22) Date of filing: 28.12.2012
(51) Int. Cl.: B62M 25/08

(54) **Automatic gear shifting bicycle with gearshift protection mechanism**

(30) Priority: 30.12.2011 CN 201110453991; 30.12.2011 CN 201110456227
(71) Applicant: J.D Components Co., Ltd., Shou Shui Hsiang, Chang Hua Hsien (TW)
(72) Inventor: Cheng,, Chi-Chang, Chang Hua Hsien, (TW); Chuo,, Chiang-Che, Chang Hua Hsien, (TW); Huang,, Qing-Shui, Chang Hua Hsien, (TW); Gong,, Lin-Hai, Chang Hua Hsien, (TW); Miao,, Lin, Chang Hua Hsien, (TW); Wang,, Shih-Chieh, Chang Hua Hsien, (TW); Tsai,, Meng-Jie, Chang Hua Hsien, (TW); Chang,, Yu-Ming, Chang Hua Hsien, (TW)
(74) Representative: Becker Kurig Straus

(57) **Abstract**

An automatic gear shifting bicycle (10)(30)(50)(70)(90) with gearshift protection mechanism includes: a bicycle body (11)(51); a power module (21); a microcomputer (23)(83) having an automatic gear shifting logic (231)(831); a gearshift control driver (25); and a sensor (27)(47)(67)(67')(87)(107). The microcomputer (23)(83) has a protection criterion (232). After determining that gear shifting should occur, the microcomputer (23)(83) will not perform gear shifting operation but compare a current riding status with the protection criterion (232). After determining that the current riding status meets the protection criterion (232), the microcomputer (23)(83) will perform the gear shifting operation and execute the automatic gear shifting logic (231)(831). After determining that the current riding status does not meet the protection criterion (232), the microcomputer (23)(83) will suspend the gear shifting operation until the current riding status meets the protection criterion (232), perform the gear shifting operation, and resume the execution of the automatic gear shifting logic (231)(831).

## Description

### BACKGROUND OF THE INVENTION

1. Technical Field

The present invention relates to automatic gear shifting bicycles, and more particularly, to an automatic gear shifting bicycle with gearshift protection mechanism for protecting a gear shifting device.

2. Description of Related Art

At present, automatic gear shifting bicycles (that is, multi-speed bicycles) are popular with the general public, and thus automatic gear shifting is widely applied to electric bicycles or electric-assisted bicycles.

From a structural point of view, a multi-speed bicycle is of two types, namely an external multi-speed bicycle and an internal multi-speed bicycle. The external multi-speed bicycle is **characterized in that** its chain is located at an external position. Hence, to effectuate a speed change during a cycling process, it is necessary to pull the chain by means of a speed changing cable so that the chain undergoes displacement to thereby change an operating sprocket, thus achieving speed changing.

As regards the automatic gear shifting function of an automatic gear shifting bicycle, it is performed with a microcomputer which determines gear shifting timing and executes a gear shifting operation in accordance with its gear shifting logic and data attributed to the speed of the bicycle and sensed by sensors.

However, in the course of a ride, if microcomputer determines that gear shifting has to occur and thus executes the gear shifting operation but the chain is not rotating because the cyclist is not pedaling, a phenomenon will happen, that is, the speed changing cable has been pulled but is unable to bring about a speed change. As a result, the speed changing cable is overstretched and thus its service life is shortened, not to mention that the cyclist is likely to experience chain slip while pedaling anew.

Therefore, to effectuate automatic gear shifting, the external multi-speed bicycle has to operate by a technique whereby an automatic gear shifting operation is performed successfully, so as to avoid the aforesaid problems, namely reduction in the service life of the speed changing cable, and chain slip.

### SUMMARY OF THE INVENTION

It is an objective of the present invention to provide an automatic gear shifting bicycle with gearshift protection mechanism whereby a microcomputer for controlling an automatic gear shifting operation determines a riding status before performing speed changing operation so as to determine whether to perform the speed changing operation, with a view to preventing reduction in the service life of a speed changing cable and preventing chain slip.

In order to achieve the above and other objectives, the present invention provides an automatic gear shifting bicycle with gearshift protection mechanism, comprising: a bicycle body having a derailleur, an active sprocket, a passive sprocket, and a crankshaft, the active sprocket being disposed at the crankshaft and meshing with a chain to drive the passive sprocket; a power module disposed at the bicycle body to supply power required for gear shifting; a microcomputer electrically connected to the power module and having an automatic gear shifting logic for determining gear shifting timing and performing the gear shifting operation; a gearshift control driver electrically connected to the microcomputer and controlled by the microcomputer to drive the derailleur to perform gear shifting; and at least a sensor disposed at a predetermined position of the bicycle body, electrically connected to the microcomputer, and adapted to detect at least one of wheel speed, pedaling speed, active sprocket rotation speed, and chain speed.

wherein the microcomputer has at least a protection criterion, so as not to allow gear shifting to occur but to compare a current riding status with the at least a protection criterion as soon as the microcomputer determines that gear shifting should occur, wherein, if the microcomputer determines that the current riding status meets the at least a protection criterion, the gear shifting operation will be performed, and the automatic gear shifting logic will be executed, wherein, if the microcomputer determines that the current riding status does not meet the at least a protection criterion, the gear shifting operation will be suspended until the current riding status meets the at least a protection criterion, the gear shifting operation will resume, and the execution of the automatic gear shifting logic will resume, wherein the at least a protection criterion includes at least one of wheel speed, pedaling speed, active sprocket rotation speed, and chain speed. Accordingly, the aforesaid objective is achieved.

### BRIEF DESCRIPTION OF THE SEVERAL VIEWS OF THE DRAWINGS

Objectives, features, and advantages of the present invention are hereunder illustrated with specific embodiments in conjunction with the accompanying drawings, in which:

FIG. 1 is a structural schematic view of the first preferred embodiment of the present invention;

FIG. 2 is an assembly schematic view of the first preferred embodiment of the present invention;

FIG. 3 is a flowchart of the first preferred embodiment of the present invention;

FIG. 4 is an assembly schematic view of the second preferred embodiment of the present invention;

FIG. 5 is an assembly schematic view of the third preferred embodiment of the present invention;

FIG. 6 is a partial schematic view of the third preferred embodiment of the present invention, showing a unidirectional controller;

FIG. 7 is a cross-sectional schematic view of the fourth preferred embodiment of the present invention;

FIG. 8 is a structural schematic view of the fifth preferred embodiment of the present invention;

FIG. 9 is an assembly schematic view of the sixth embodiment of the present invention;

FIG. 10 is a cross-sectional schematic view of the seventh preferred embodiment of the present invention; and

FIG. 11 is an assembly schematic view of the seventh preferred embodiment of the present invention.

### DETAILED DESCRIPTION OF THE EMBODIMENTS OF THE INVENTION

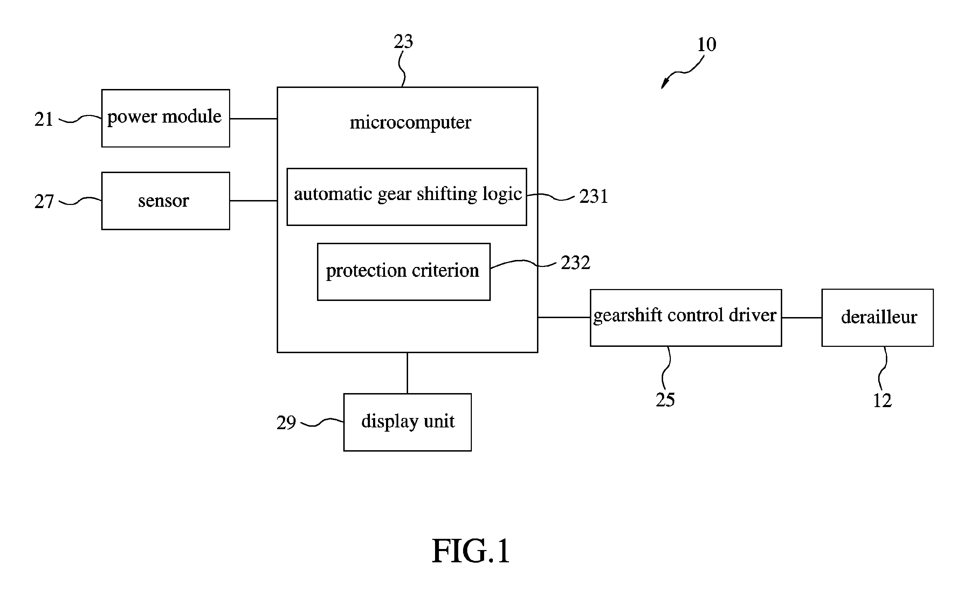

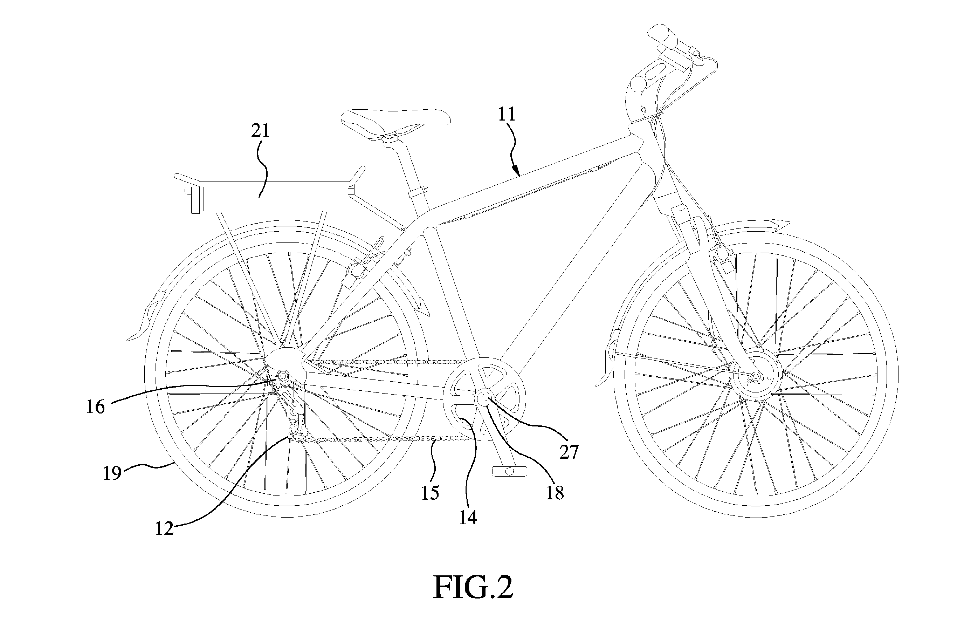

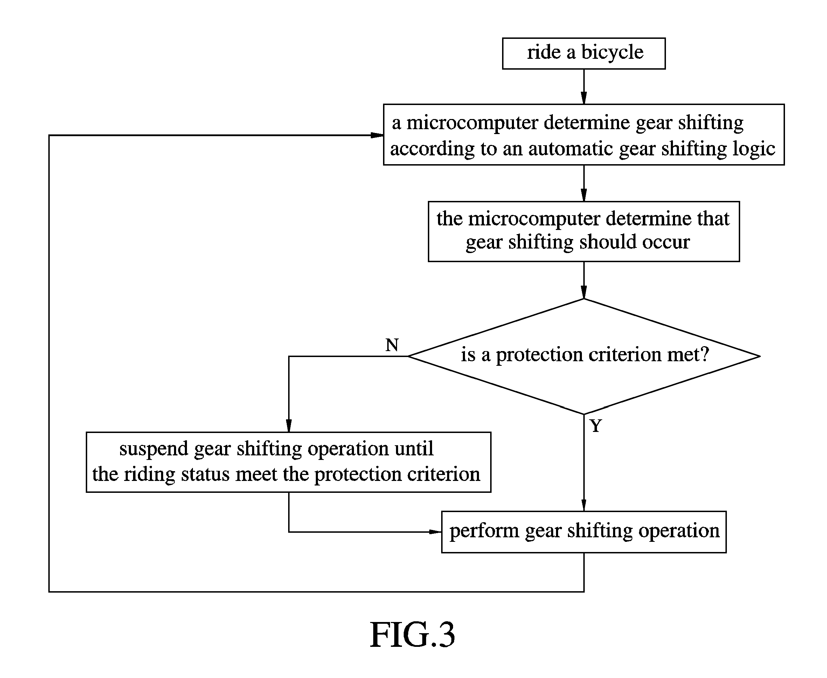

Referring to FIG. 1 through FIG. 3, there shown diagrams of an automatic gear shifting bicycle with gearshift protection mechanism (10) of the first preferred embodiment of the present invention. As shown in the diagrams, the automatic gear shifting bicycle with gearshift protection mechanism (10) essentially comprises a bicycle body (11), a power module (21), a microcomputer (23), a gearshift control driver (25), and at least a sensor (27).

The bicycle body (11) essentially comprises a derailleur (12), an active sprocket (14), a passive sprocket (16), and a crankshaft (18). The active sprocket (14) is disposed at the crankshaft (18) and meshes with a chain (15) to thereby drive the passive sprocket (16). The passive sprocket (16) is disposed at a rear wheel (19) of the bicycle body (11). The other constituent components of the bicycle body (11) are disclosed in the prior art and thus are not described in detail herein for the sake of brevity.

The power module (21) is disposed at the bicycle body (11) and adapted to supply the power required for gear shifting.

The microcomputer (23) is electrically connected to the power module (21) and has an automatic gear shifting logic (231) for determining gear shifting timing and performing a gear shifting operation.

The gearshift control driver (25) is electrically connected to the microcomputer (23) and controlled by the microcomputer (23) to drive the derailleur (12) to perform the gear shifting operation.

The at least a sensor (27) is disposed at a predetermined position of the bicycle body (11), electrically connected to the microcomputer (23), and adapted to detect wheel speed, pedaling speed, active sprocket rotation speed, and/or chain speed. In the first embodiment, for example, the at least a sensor (27) is in the number of one and is intended to sense the pedaling speed.

The microcomputer (23) has at least a protection criterion (232). In the first embodiment, for example, the at least a protection criterion (232) is in the number of one. If the microcomputer (23) determines that gear shifting should occur, gear shifting will not occur, and the current riding status will be compared with the protection criterion (232). If the microcomputer (23) determines that the current riding status meets the protection criterion (232), the gear shifting operation will be performed, and the automatic gear shifting logic (231) will be executed. If the microcomputer (23) determines that the current riding status does not meet the protection criterion (232), the gear shifting operation will be suspended until the current riding status meets the protection criterion (232), the gear shifting operation will be performed, and the execution of the automatic gear shifting logic (231) will resume.

The protection criterion (232) relates to pedaling operation. In the first embodiment, the protection criterion (232) is that the rotation speed (that is, pedaling speed) of the crankshaft (18) is larger than a first predetermined value. The first predetermined value is exemplified by 10 revolutions per minute (RPM), but the first predetermined value can also be exemplified by larger than 10 revolutions per minute, such as 20 revolutions per minute.

In the first embodiment, the automatic gear shifting bicycle with gearshift protection mechanism (10) further comprises a display unit (29) electrically connected to the microcomputer (23). As soon as the microcomputer (23) stops accessing the automatic gear shifting logic (231), the display unit (29) displays a message, so as to inform a cyclist that automatic gear shifting is temporarily suspended for now. However, the display unit (29) is not a required element; hence, in the situation where the display unit (29) is dispensed with, the cyclist is merely unaware as to whether, for the time being, automatic gear shifting is suspended or is taking place; however, the cyclist can still continue riding the bicycle, that is, the display unit (29) is not indispensable to the first embodiment of the present invention.

The operation of the automatic gear shifting bicycle with gearshift protection mechanism (10) in the first embodiment is described hereunder.

Referring to FIG. 1 through FIG. 3, in the course of the cyclist's pedaling and riding a bicycle, the microcomputer (23) determines gear shifting timing and performs a gear shifting operation according to the automatic gear shifting logic (231). If the microcomputer (23) determines that gear shifting should occur, gear shifting will not occur, and the current riding status will be compared with the protection criterion (232) (that is, the rotation speed of the crankshaft (18) is larger than or equal to 10 revolutions per minute). If the microcomputer (23) determines that the current riding status meets the protection criterion (232), that is, the cyclist is pedaling (not shown) for the time being, and the chain (15) is rotating accordingly, then the gear shifting operation will be performed. Upon completion of the gear shifting operation, the execution of the automatic gear shifting logic (231) will resume, so as to determine whether to perform the next gear shifting operation. If the microcomputer (23) determines that the current riding status does not meet the protection criterion (232) (that is, the rotation speed of the crankshaft (18) is less than 10 revolutions per minute), the gear shifting operation will be suspended until the current riding status meets the protection criterion (232) (that is, the pedaling speed is larger than or equal to 10 revolutions per minute), the gear shifting operation will be performed, and the execution of the automatic gear shifting logic (231) will resume, so as to determine whether to perform the next gear shifting operation.

Hence, the microcomputer (23) for controlling automatic gear shifting operations determines a riding status and then determines whether to perform an automatic gear shifting operation before starting to do so. Hence, the present invention ensures that gear shifting operations can always be finished to thereby protect a gear shifting device, prevent reduction in the service life of a speed changing cable, and reduce the likelihood of chain slip.

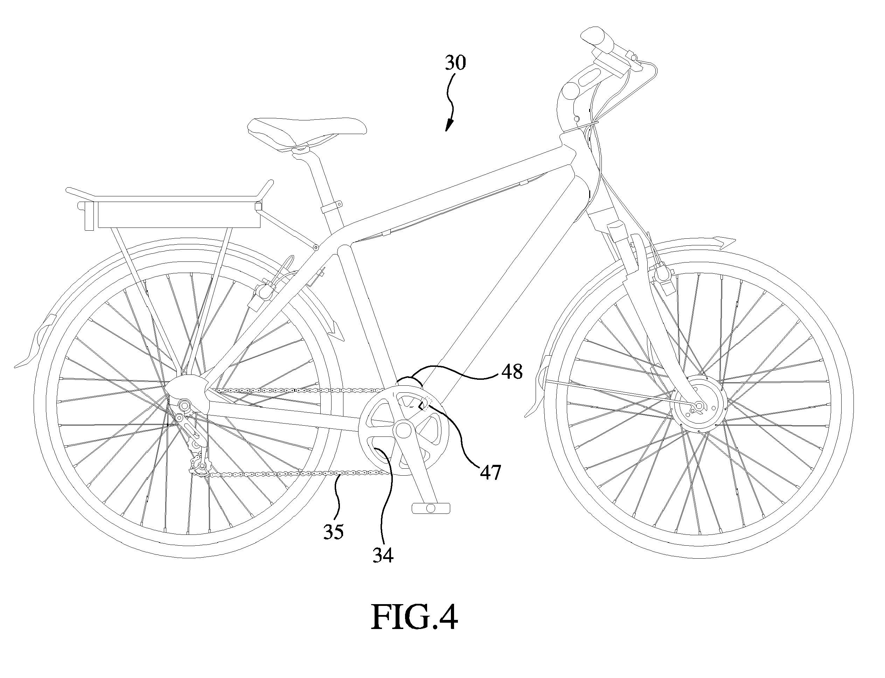

Referring to FIG. 4, an automatic gear shifting bicycle with gearshift protection mechanism (30) in the second preferred embodiment of the present invention is similar to its counterpart in the first preferred embodiment, but the differences therebetween are as follows:

The sensor (47) detects the rotation speed of an active sprocket (34).

The protection criterion (not shown) is that the rotation speed of the active sprocket (34) is larger than a second predetermined value. In the second embodiment, the second predetermined value is exemplified by 10 revolutions per minute (RPM), but it is also feasible that the second predetermined value is larger than 10 revolutions per minute, such as 20 revolutions per minute.

The automatic gear shifting bicycle with gearshift protection mechanism (30) in the second preferred embodiment further comprises a mid-mounted motor (48). The mid-mounted motor (48) has an output gear (not shown) for connecting and driving the crankshaft, the active sprocket, or the chain. In this regard, the second preferred embodiment is exemplified by connecting and driving the active sprocket. The mid-mounted motor (48) supplies an electric driving force and is disclosed in the prior art. Also, its output gear is disclosed in the prior art. Likewise, the way of connecting the mid-mounted motor (48) and the active sprocket is disclosed in the prior art; hence, related details of the aforesaid connection are not illustrated with the accompanying drawings.

Since the purpose of the active sprocket (34) is to drive a chain (35) to rotate, the chain (35) will rotate, provided that the active sprocket (34) rotates. Hence, the present invention ensures that gear shifting operations can always be performed successfully, prevent reduction in the service life of the speed changing cable, and reduce the likelihood of chain slip.

The other structural features and operation-related details in the second embodiment are identical to their counterparts in the first embodiment and thus are not described in detail herein for the sake of brevity.

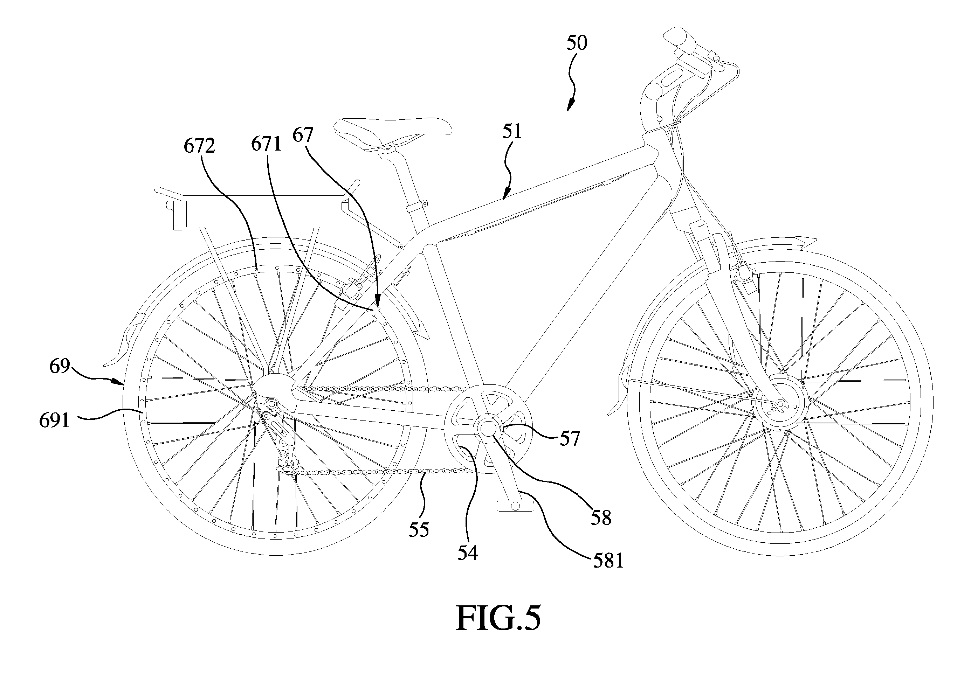

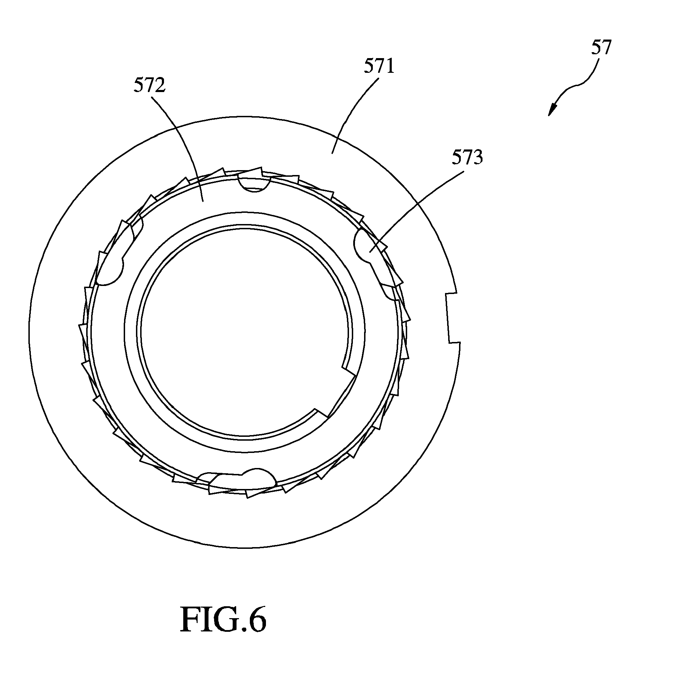

Referring to FIG. 5 through FIG. 6, an automatic gear shifting bicycle with gearshift protection mechanism (50) of the third preferred embodiment of the present invention is similar to its counterpart in the first preferred embodiment, but the differences therebetween are described below.

The bicycle body (51) has a unidirectional controller (57). An active sprocket (54) is disposed at the crankshaft (58) by means of the unidirectional controller (57). The active sprocket (54), a chain (55), and a wheel (that is, a rear wheel) are linked in order to operate. In this embodiment, the unidirectional controller (57) comprises a ratchet wheel (571), a ratchet stand (572), and a plurality of claws (573) disposed between the ratchet wheel (571) and the ratchet stand (572). The ratchet wheel (571) connects to the active sprocket (54). The ratchet stand (572) connects to a crank (581) of the crankshaft (58). The claws (573) each have an end pivotally disposed at the ratchet stand (572) and another end engaged with the ratchet wheel (571). Hence, the unidirectional controller (57) is driven by the crank (581) connected thereto to thereby drive the active sprocket (54) to rotate in a unidirectional manner. As soon as the rotation speed of the active sprocket (54) is larger than the rotation speed of the crank (581), the unidirectional controller (57) disables the relative rotation of the active sprocket (54) and the crank (581) to each other.

In this embodiment, the sensor (67) has a Hall sensor (671) and a plurality of magnets (672). The magnets (672) are fixed to a wheel rim (691) of a rear wheel (69), correspond in position to the Hall sensor (671), and detect the wheel speed of the rear wheel (69).

The protection criterion (not shown) is that the wheel speed is larger than a third predetermined value. In the third embodiment, the third predetermined value is exemplified by 5 km/h, but it is also feasible for the third predetermined value to be larger than 5 km/h, such as 6 km/h.

The active sprocket (54) is disposed at the crankshaft (58) by means of the unidirectional controller (57). Hence, the rear wheel in the third embodiment is dispensed with a unidirectional controller. By contrast, a rear wheel of a conventional bicycle is typically equipped with a unidirectional controller. In the third embodiment, the aforesaid way of coupling the unidirectional controller (57) and the crankshaft (58) together enables the active sprocket (54), the chain (55), and the rear wheel of a bicycle to move simultaneously, and thus the rotation speed of the chain (55) can be estimated by the wheel speed. The rotation of the chain (55) ensures that gear shifting operations will always be successfully performed, so as to prevent reduction in the service life of the speed changing cable and reduce the likelihood of chain slip.

The other structural features and operation-related details in the third embodiment are identical to their counterparts in the first embodiment and thus are not described in detail herein for the sake of brevity.

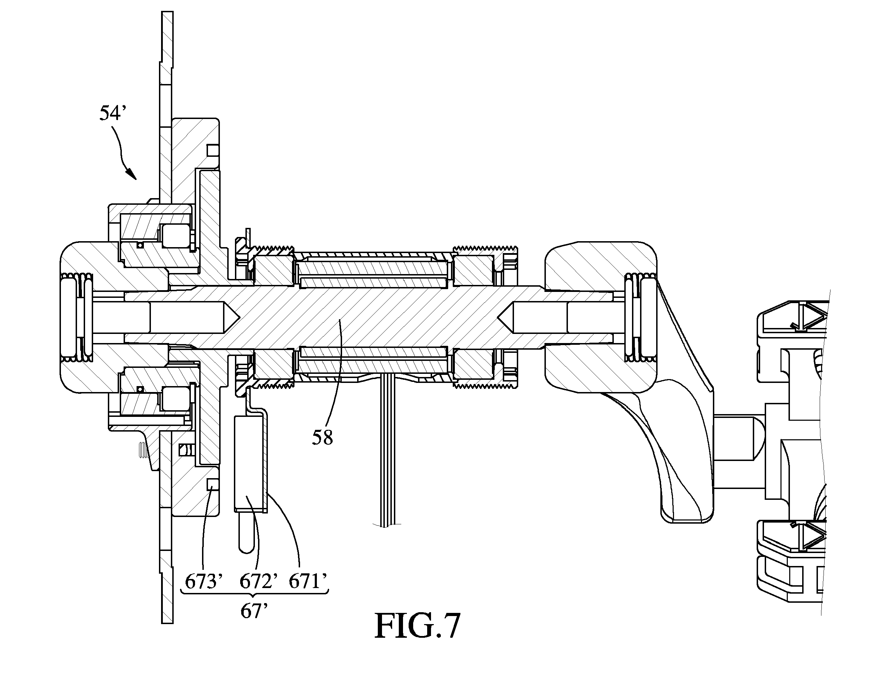

Referring to FIG. 7, the automatic gear shifting bicycle with gearshift protection mechanism of the fourth preferred embodiment of the present invention is similar to its counterpart in the third preferred embodiment, but the differences therebetween are described below.

The sensor (67') has an installation base (671'), a Hall sensor (672'), and a plurality of magnets (673'). The installation base (671') is fittingly disposed at the crankshaft (58'). The Hall sensor (672') is disposed at the installation base (671'). The magnets (673') are fixed to an active sprocket (54') and rotate relative to the Hall sensor (672') in response to the dynamic state of the active sprocket (54').

Hence, the rotation speed of the active sprocket (54') relative to the crankshaft (58') can be sensed. The protection criterion of the fourth embodiment is identical to that of the second embodiment and thus is not illustrated with the accompanying drawings for the sake of brevity.

The other structural features and operation-related details in the fourth embodiment are identical to their counterparts in the third embodiment and thus are not described in detail herein for the sake of brevity.

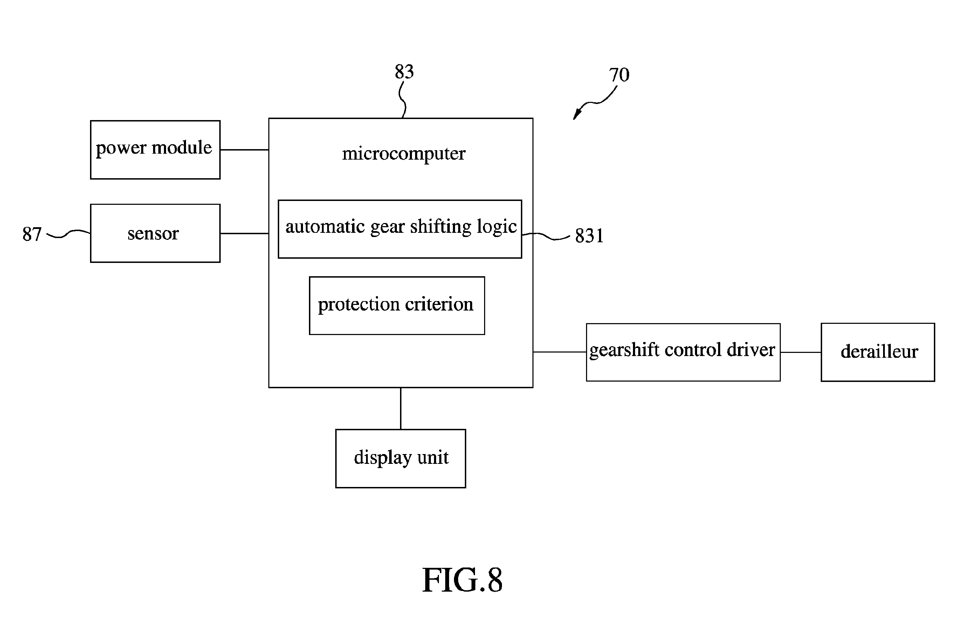

Referring to FIG. 8, an automatic gear shifting bicycle with gearshift protection mechanism (70) in the fifth preferred embodiment of the present invention is similar to its counterpart in the first preferred embodiment of the present invention, but the differences therebetween are described below.

The sensor (87) detects the wheel speed.

The microcomputer (83) determines the current wheel speed. If the microcomputer (83) determines that the wheel speed is less than a fourth predetermined value, the microcomputer (83) will stop accessing the automatic gear shifting logic (831). If the microcomputer (83) determines that the wheel speed is larger than or equal to the fourth predetermined value, the microcomputer (83) will access the automatic gear shifting logic (831). In the fifth embodiment, the fourth predetermined value is exemplified by 5 km/h, but it is also feasible for the fourth predetermined value to be larger than 5 km/h, such as 6 km/h.

Hence, if the microcomputer (83) determines that the driving speed is less than the fourth predetermined value (such as 5 km/h), the microcomputer (83) will stop accessing the automatic gear shifting logic (831), so as to preclude automatic gear shifting operations and dispense with the determination as to whether the protection criterion is met. In doing so, the present invention precludes the situation where the microcomputer (83) determines that a gear shifting operation has to be performed at a low speed but it fails to perform the gear shifting operation. Accordingly, the present invention prevents reduction in the service life of the speed changing cable and reduces the likelihood of chain slip.

The other structural features and operation-related details in the fifth embodiment are identical to their counterparts in the first embodiment and thus are not described in detail herein for the sake of brevity.

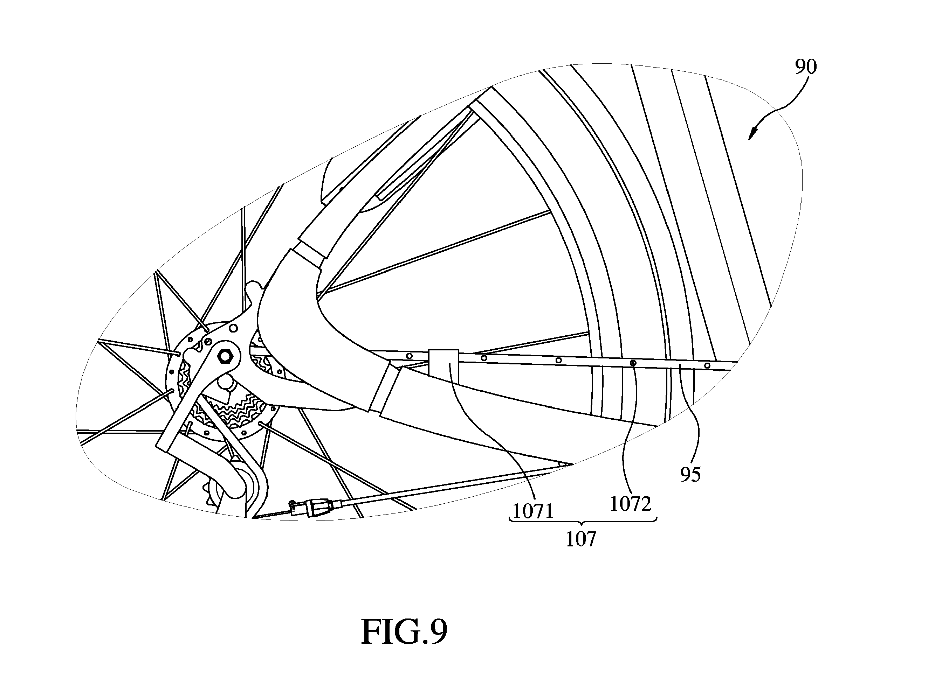

Referring to FIG. 9, an automatic gear shifting bicycle with gearshift protection mechanism (90) of the sixth preferred embodiment of the present invention is similar to its counterpart in the first preferred embodiment, but the differences therebetween are described below.

In the sixth preferred embodiment, the sensor (107) has a Hall sensor (1071) and a plurality of magnets (1072). The magnets (1072) are fixed to a chain (95), correspond in position to the Hall sensor (1071), and detect the speed of the chain (95).

The protection criterion (not shown) is that the speed of the chain (95) is larger than a fifth predetermined value. In the fifth embodiment, the fifth predetermined value is exemplified by 2 cm/s, but it is also feasible for the fifth predetermined value to be larger than 2 cm/s, such as 2.2 cm/s.

The chain (95) will be rotating, provided that the speed of the chain (95) is larger than 0 cm/s; hence, the fifth embodiment of the present invention ensures that a gear shifting operation will be successfully performed to thereby prevent reduction in the service life of the speed changing cable and reduce the likelihood of chain slip.

The other structural features and operation-related details in the sixth embodiment are identical to their counterparts in the first embodiment and thus are not described in detail herein for the sake of brevity.

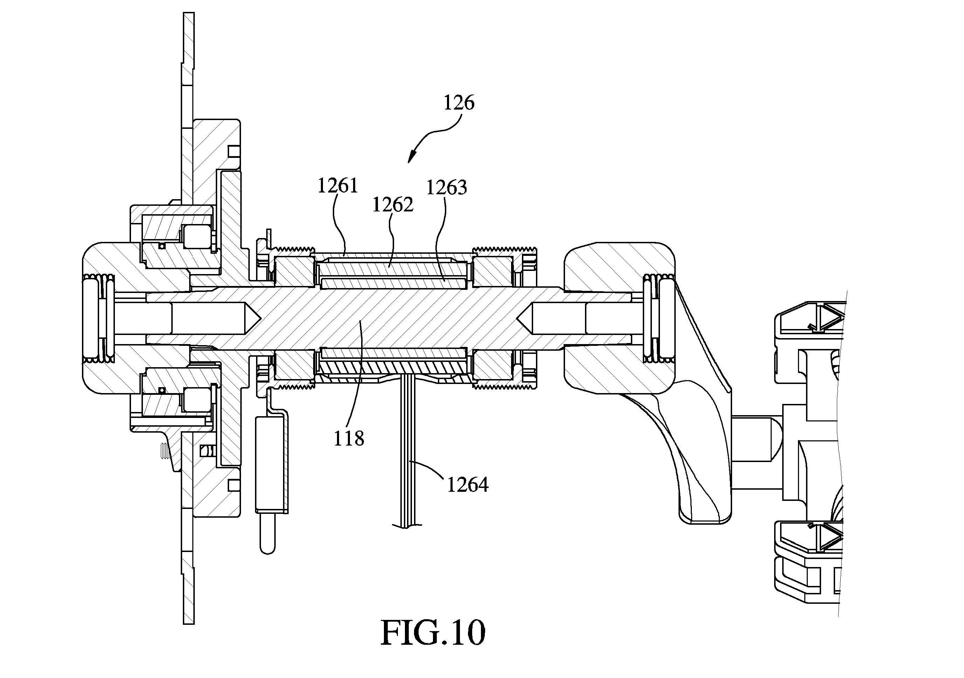

Referring to FIG. 10 through FIG. 11, the automatic gear shifting bicycle with gearshift protection mechanism in the seventh preferred embodiment of the present invention is similar to its counterpart in the first preferred embodiment, but the differences therebetween are described below.

Referring to FIG. 10, the automatic gear shifting bicycle with gearshift protection mechanism in the seventh embodiment further comprises a power generating device (126). The power generating device (126) has a coil stand (1261), a coil (1262), a magnet (1263), and a wire (1264). The coil stand (1261) is connected to the crankshaft (118). The coil (1262) is fixed to the coil stand (1261). The magnet (1263) is fixed to the crankshaft (118), faces the coil (1262), and is driven by the crankshaft (118) to rotate relative to the coil (1262). The wire (1264) is connected to the coil (1262).

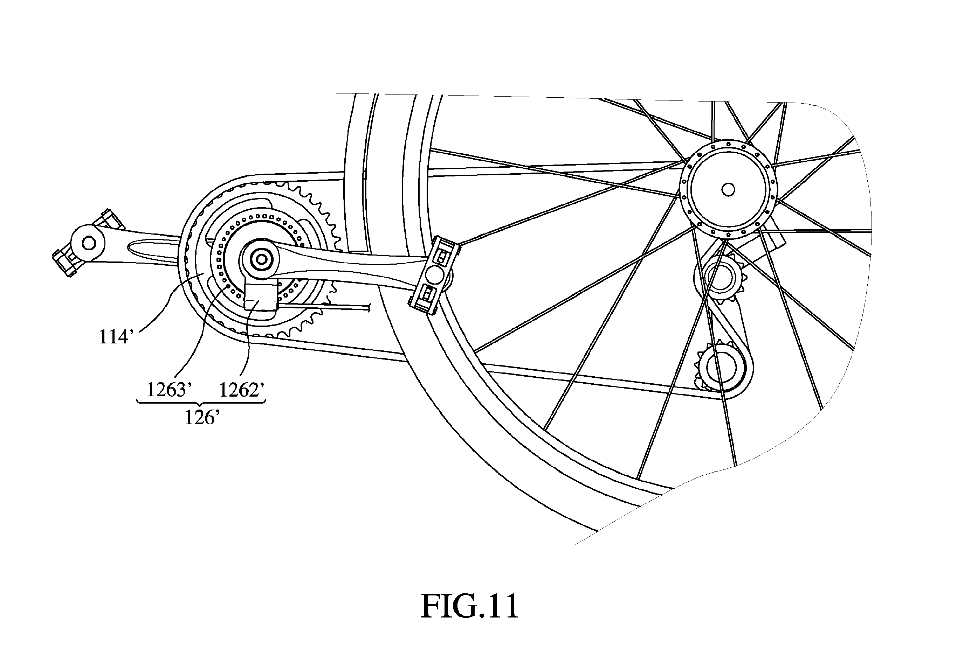

Referring to FIG. 11, it is also feasible that the magnet (1263') of the power generating device (126') is disposed at an active sprocket (114'), faces the coil (1262'), and is driven by the active sprocket (114') to rotate around the coil (1262').

Accordingly, the power generating device (126') will generate power by means of the electrically induced magnetic field of coils (1262,1262'), provided that the crankshaft (118) is rotating (that is, the cyclist is pedaling) or the active sprocket (114') is rotating, and the power thus generated is supplied to a device to the recharged, such as a battery.

The other structural features and operation-related details in the seventh embodiment are identical to their counterparts in the first embodiment and thus are not described in detail herein for the sake of brevity.

In the first, second, third, and sixth embodiments, it is also feasible for the protection criterion to be in the number of two or more rather than in the number of one. Furthermore, given multiple protection criteria (including the wheel speed, pedaling speed, active sprocket rotation speed, chain speed), it is necessary that the wheel speed, pedaling speed, active sprocket rotation speed, and chain speed are detected with multiple and different sensors, respectively, in order to allow the microcomputer to determine whether the multiple protection criteria are met.

## Claims

1. An automatic gear shifting bicycle (10)(30)(50)(70)(90) with gearshift protection mechanism, comprising:
a bicycle body (11)(51) having a derailleur (12), an active sprocket (14)(34)(54)(54')(114'), a passive sprocket (16), and a crankshaft (18)(58)(58')(118), the active sprocket (14)(34)(54)(54')(114') being disposed at the crankshaft (18)(58)(58')(118) and meshing with a chain (15)(35)(55)(95) to drive the passive sprocket (16);
a power module (21) disposed at the bicycle body (11)(51) to supply power required for gear shifting;
a microcomputer (23)(83) electrically connected to the power module (21) and having an automatic gear shifting logic (231)(831) for determining gear shifting timing and performing a gear shifting operation;
a gearshift control driver (25) electrically connected to the microcomputer (23)(83) and controlled by the microcomputer (23)(83) to drive the derailleur (12) to perform gear shifting; and
at least a sensor (27)(47)(67)(67')(87)(107) disposed at a predetermined position of the bicycle body (11)(51), electrically connected to the microcomputer (23)(83), and adapted to detect at least one of wheel speed, pedaling speed, active sprocket rotation speed, and chain speed,
which is **characterized in that** the microcomputer (23)(83) has at least a protection criterion (232), so as not to allow gear shifting to occur but to compare a current riding status with the at least a protection criterion (232) as soon as the microcomputer (23)(83) determines that gear shifting should occur; if the microcomputer (23)(83) determines that the current riding status meets the at least a protection criterion (232), the gear shifting operation will be performed, and the automatic gear shifting logic (231)(831) will be executed; if the microcomputer (23)(83) determines that the current riding status does not meet the at least a protection criterion (232), the gear shifting operation will be suspended until the current riding status meets the at least a protection criterion (232), the gear shifting operation will resume, and the execution of the automatic gear shifting logic (231)(831) will resume; the at least a protection criterion (232) includes at least one of wheel speed, pedaling speed, active sprocket rotation speed, and chain speed.

2. The automatic gear shifting bicycle with gearshift protection mechanism of claim 1, wherein the at least a sensor (27) detects the pedaling speed, wherein the at least a protection criterion (232) is that the crankshaft rotation speed (that is, the pedaling speed) is larger than a first predetermined value.

3. The automatic gear shifting bicycle with gearshift protection mechanism of claim 1, wherein the at least a sensor (47) detects the active sprocket (34) rotation speed, wherein the at least a protection criterion is that the active sprocket rotation speed is larger than a second predetermined value.

4. The automatic gear shifting bicycle with gearshift protection mechanism of claim 1, wherein the bicycle body (51) has a unidirectional controller (57), and the active sprocket (54)(54') is disposed at the crankshaft (58)(58') by means of the unidirectional controller (57), wherein the active sprocket (54)(54'), the chain (55), and a wheel (69) are linked in order to operate.

5. The automatic gear shifting bicycle with gearshift protection mechanism of claim 4, wherein the at least a sensor (67) has a Hall sensor (671) and a plurality of magnets (672), the magnets (672) being fixed to a wheel rim (691) of a rear wheel (69) and corresponding in position to the Hall sensor (671), wherein the at least a protection criterion is that the wheel speed is larger than a third predetermined value.

6. The automatic gear shifting bicycle with gearshift protection mechanism of claim 4, wherein the at least a sensor (67') has an installation base (671'), a Hall sensor (672'), and a plurality of magnets (673'), the installation base (671') being disposed fittingly at the crankshaft (58'), the Hall sensor (672') being disposed at the installation base (671'), and the magnets (673') being fixed to the active sprocket (54') to thereby rotate relative to the Hall sensor (672') in response to a dynamic state of the active sprocket (54'), wherein the at least a protection criterion is that the active sprocket rotation speed is larger than a second predetermined value.

7. The automatic gear shifting bicycle with gearshift protection mechanism of claim 1, further comprising a mid-mounted motor (48) having an output gear for meshing and driving one of the crankshaft, the active sprocket (34), and the chain (35).

8. The automatic gear shifting bicycle with gearshift protection mechanism of claim 4, wherein the unidirectional controller (57) comprises a ratchet wheel (571), a ratchet stand (572), and a plurality of claws (573) disposed between the ratchet wheel (571) and the ratchet stand (572), the ratchet wheel (571) connecting to the active sprocket (54), and the ratchet stand (572) connecting to a crank (581) of the crankshaft (58), wherein the claws (573) each have an end pivotally disposed at the ratchet stand (572) and another end engaged with the ratchet wheel (571).

9. The automatic gear shifting bicycle with gearshift protection mechanism of claim 1, wherein the at least a sensor (87) detects the wheel speed, wherein, if the wheel speed is less than a fourth predetermined value, the microcomputer (83) will stop accessing the automatic gear shifting logic (831), wherein, if the wheel speed is larger than or equal to the fourth predetermined value, the microcomputer (83) will access the automatic gear shifting logic (831).

10. The automatic gear shifting bicycle with gearshift protection mechanism of claim 1, further comprising a display unit (29) electrically connected to the microcomputer (23), wherein the display unit (29) displays a message as soon as the microcomputer (23) stops accessing the automatic gear shifting logic (231).

11. The automatic gear shifting bicycle with gearshift protection mechanism of claim 1, wherein the at least a sensor (107) has a Hall sensor (1071) and a plurality of magnets (1072), the magnets (1072) being fixed to the chain (95) and corresponding in position to the Hall sensor (1071), wherein the at least a protection criterion is that the chain (95) speed is larger than a fifth predetermined value.

12. The automatic gear shifting bicycle with gearshift protection mechanism of claim 1, further comprising a power generating device (126) having a coil stand (1261), a coil (1262), a magnet (1263), and a wire (1264), the coil stand (1261) connecting to the crankshaft (118), the coil (1262) being fixed to the coil stand (1261), the magnet (1263) being fixed to the crankshaft (118), facing the coil (1262), and being driven by the crankshaft (118) to rotate relative to the coil (1262), and the wire (1264) connecting to the coil (1262).

13. The automatic gear shifting bicycle with gearshift protection mechanism of claim 1, further comprising a power generating device (126') having a coil stand, a coil (1262'), a magnet (1263'), and a wire, the coil stand connecting to the crankshaft (118), the coil (1262') being disposed at the coil stand, the magnet (1263') being disposed at the active sprocket (114'), facing the coil (1262'), and being driven by the active sprocket (114') to rotate around the coil (1262'), and the wire connecting to the coil (1262').
